# EUROPÄISCHE PATENTSCHRIFT

(11) **EP 2 469 325 B1**
(45) Veröffentlichungstag und Bekanntmachung des Hinweises auf die Patenterteilung: **09.11.2016**
(21) Anmeldenummer: 11190086.6
(22) Anmeldetag: 22.11.2011
(51) Int. Cl.: G02B 19/00, G02B 27/10, G02B 27/14, G01C 15/00, G02B 27/09

(54) **Optisches System zur Strahlformung eines Laserstrahls sowie Lasersystem mit einem solchen optischen System**
Optical system for forming a laser beam and laser system with such an optical system
Système optique pour la formation d'un rayonnement laser ainsi que système laser doté d'un tel système optique

(30) Priorität: 22.12.2010 DE 102010063924
(43) Veröffentlichungstag der Anmeldung: 27.06.2012
(73) Patentinhaber: HILTI Aktiengesellschaft, 9494 Schaan (LI)
(72) Erfinder: Dang, Lieu-Kim, 9479 Gams (CH); Barth, Stefan, 97082 Würzburg (DE)
(74) Vertreter: Hilti Aktiengesellschaft Corporate Intellectual Property

(56) Entgegenhaltungen:
- WO-A1-2004/044641
- US-A- 5 644 400
- US-A1- 2004 085 646
- US-A1- 2004 107 588
- US-A1- 2005 091 859
- US-A1- 2006 091 429

## Beschreibung

Die vorliegende Erfindung betrifft ein optisches System zur Strahlformung eines Laserstrahls gemäß dem Oberbegriff des Anspruchs 1.

Ein einfallender Laserstrahl wird an einer Grenzfläche grundsätzlich in drei Teile aufgeteilt: Ein erster Teil wird an der Grenzfläche reflektiert (reflektierter Laserstrahl), ein zweiter Teil tritt durch die Grenzfläche in das zweite optische Medium ein (transmittierter Laserstrahl) und ein dritter Teil wird an der Grenzfläche absorbiert (absorbierter Laserstrahl). Als Grenzfläche ist eine Fläche definiert, die zwischen zwei Medien mit unterschiedlichen Brechungsindices angeordnet ist. Als Transmissionsfläche wird eine Grenzfläche bezeichnet, an der ein Laserstrahl überwiegend von einem ersten in ein zweites optisches Medium übertritt. Als Reflektionsfläche wird eine Grenzfläche bezeichnet, an der ein Laserstrahl überwiegend innerhalb eines optischen Mediums umgelenkt wird. Die Anteile des reflektierten, transmittierten und absorbierten Laserstrahls können beispielsweise über die Wellenlänge und/oder den Einfallswinkel des einfallenden Laserstrahls und/oder eine Beschichtung der Grenzfläche verändert werden.

DE 10 2010 028 794 offenbart ein optisches System zur Strahlformung eines Laserstrahls bestehend aus einem optischen Element, das als Grundkörper mit einer Grundfläche, einer zur Grundfläche parallelen Deckfläche und einer an die Grund- und Deckfläche angrenzenden Mantelfläche ausgebildet ist. Dabei ist die Mantelfläche des Grundkörpers als Transmissionsfläche für den Laserstrahl ausgebildet. Der Grundkörper umfasst einen ersten Ausschnitt mit einer Grundfläche, die in der Deckfläche des Grundkörpers angeordnet ist, und einer Mantelfläche, die als erste Reflektionsfläche für den Laserstrahl ausgebildet ist. Ein einfallender Laserstrahl wird an der Mantelfläche des ersten Ausschnittes, die die erste Reflektionsfläche bildet, umgelenkt und in einen ringförmigen Laserstrahl umgeformt. Um auf einer Zielfläche eine horizontale linienförmige Lasermarkierung zu erzeugen, ist erforderlich, dass der einfallende Laserstrahl um 90° umgelenkt wird. Das bekannte optische System zur Strahlformung eines Laserstrahls bietet die Möglichkeit, mit geringem Justageaufwand auf einer Zielfläche eine linienförmige Lasermarkierung zu erzeugen. Nachteilig ist, dass das optische System empfindlich gegenüber einer Verkippung der ersten Reflektionsfläche zum einfallenden Laserstrahl ist.

Aus WO 2004/044641 A1 ist ein optisches System zur Strahlformung eines Laserstrahls bekannt, das gegenüber einer Verkippung der Reflektionsfläche zum einfallenden Laserstrahl unempfindlich ist. Das optische System umfasst ein erstes optisches Element, das als Grundkörper mit einer Grundfläche, einer Deckfläche und einer Mantelfläche ausgebildet ist. Der Grundkörper umfasst einen kegelförmigen, ersten Ausschnitt mit einer Grundfläche und einer Mantelfläche sowie einen kegelstumpfförmigen, zweiten Ausschnitt mit einer Grundfläche, einer Deckfläche und einer Mantelfläche. Die Deckfläche des zweiten Ausschnittes und die Mantelfläche des Grundkörpers sind als Transmissionsflächen für den Laserstrahl ausgebildet und die Mantelflächen des ersten und zweiten Ausschnittes sind als Reflektionsflächen für den Laserstrahl ausgebildet. Zur Strahlformung des einfallenden Laserstrahls ist ein zweites optisches Element vorgesehen, das den Laserstrahl kollimiert und als kollimierten Laserstrahl auf das erste optische Element richtet. Nachteilig ist, dass das erste und zweite optische Element getrennt voneinander ausgebildet sind und zueinander justiert werden müssen.

Die Aufgabe der vorliegenden Erfindung besteht demgegenüber darin, ein optisches System zur Strahlformung eines Laserstrahls zu entwickeln, bei dem der Justageaufwand weiterhin reduziert ist und bei dem die Intensität des Laserstrahls an die Messaufgabe angepasst ist.

Diese Aufgabe wird bei dem eingangs genannten optischen System zur Strahlformung eines Laserstrahls erfindungsgemäß durch die Merkmale des unabhängigen Anspruchs 1 gelöst. Vorteilhafte Weiterbildungen sind in den abhängigen Ansprüchen angegeben.

Erfindungsgemäß ist vorgesehen, dass mindestens ein weiteres optisches Element in die Mantelfläche des Grundkörpers, die Mantelfläche des ersten Ausschnittes oder die Mantelfläche des zweiten Ausschnittes integriert ist oder mindestens ein weiteres optisches Element unmittelbar an die Mantelfläche des Grundkörpers, die Mantelfläche des ersten Ausschnittes oder die Mantelfläche des zweiten Ausschnittes angrenzt.

Das erfindungsgemäße optische Element weist eine erste und zweite Reflektionsfläche für den Laserstrahl auf, wobei die Mantelfläche des in der Deckfläche angeordneten ersten Ausschnittes die erste Reflektionsfläche und die Mantelfläche des in der Grundfläche angeordneten zweiten Ausschnittes die zweite Reflektionsfläche bilden. Dabei sind der Winkel zwischen der ersten Reflektionsfläche und der Grundfläche des ersten Ausschnittes und der Winkel zwischen der zweiten Reflektionsfläche und der Grundfläche des zweiten Ausschnittes so aufeinander abgestimmt, dass ein einfallender Laserstrahl um 90° abgelenkt wird.

Durch die zweifache Reflektion des Laserstrahls ist das erfindungsgemäße optische System unempfindlich gegenüber einer Verkippung der ersten Reflektionsfläche zum einfallenden Laserstrahl. Die erste und zweite Reflektionsfläche sind in den Grundkörper des optischen Elementes integriert, so dass die Justage der Reflektionsflächen bei der Herstellung des ersten und zweiten Ausschnittes im Grundkörper des optischen Elementes erfolgt und nur ein optischer Träger erforderlich ist.

Um auf einer Zielfläche eine um 360° geschlossene linienförmige Lasermarkierung zu erzeugen, eignen sich als Grundflächen für den Grundkörper alle begrenzten Flächen, bei denen die Richtungsableitung der Begrenzungslinie stetig ist. Ist die Richtungsableitung an einer Stelle nicht stetig, kommt es zu einer Unterbrechung des ringförmigen Laserstrahls, so dass die linienförmige Lasermarkierung auf einer Zielfläche nicht vollumfänglich geschlossen ist. Bei Anwendungen, bei denen eine geschlossene Lasermarkierung nicht erforderlich ist, können auch Grundflächen verwendet werden, deren Richtungsableitung der Begrenzungslinie an einer oder mehreren Stellen nicht stetig ist, wie beispielsweise bei einer mehreckigen Grundfläche, bei der die Richtungsableitung der Begrenzungslinie im Bereich der Seiten stetig und im Bereich der Eckpunkte nicht stetig ist.

Das mindestens eine weitere optische Element ist in die Mantelfläche des Grundkörpers, die Mantelfläche des ersten Ausschnittes oder die Mantelfläche des zweiten Ausschnittes integriert. Dabei bedeutet der Begriff "integriert", dass zwischen dem Grundkörper und dem weiteren optischen Element keine Grenzfläche besteht. Das erfindungsgemäße optische Element weist vier Grenzflächen zwischen einem ersten optischen Medium, dem Grundkörper, und einem zweiten optischen Medium, der Umgebung, auf. Diese Grenzflächen werden genutzt, um weitere optische Elemente in den Grundkörper zu integrieren. Diese Ausführung hat den Vorteil, dass die Justage des weiteren optischen Elementes bei der Herstellung des optischen Systems erfolgt und nur ein optischer Träger erforderlich ist.

Das mindestens eine weitere optische Element grenzt unmittelbar an die Mantelfläche des Grundkörpers, die Mantelfläche des ersten Ausschnittes oder die Mantelfläche des zweiten Ausschnittes an. Dabei bedeutet der Begriff "unmittelbar angrenzend", dass der Grundkörper und das weitere optische Element eine gemeinsame Grenzfläche aufweisen und zwischen den optischen Flächen der beiden optischen Elemente kein sonstiges optisches Element oder Medium mit einem unterschiedlichen Brechungsindex, wie beispielsweise Luft, angeordnet ist. Diese Ausführung hat den Vorteil, dass zwei unterschiedliche Materialien kombiniert werden können und dadurch die Eigenschaften des optischen Systems flexibler und besser an die Anforderungen anpassbar sind. Trotz unterschiedlicher optischer Materialien ist nur ein optischer Träger erforderlich und die Justage der beiden optischen Elemente erfolgt bereits bei der Herstellung des optischen Systems.

Besonders bevorzugt ist das weitere optische Element als diffraktives optisches Element ausgebildet. Diffraktive optische Elemente spalten einen einfallenden Laserstrahl winkelabhängig in verschiedene Beugungsordnungen und haben den Vorteil, dass sich Laserstrahlen in nahezu jede beliebige Strahlverteilung formen lassen. Ein diffraktives optisches Element kann nachträglich mittels scannender Strukturierungsverfahren, wie Diamantdrehen, Laseroder Elektronenstrahlschreiben, in einem Grundkörper erzeugt werden. Diese Ausführung hat den Vorteil, dass die Justage des weiteren optischen Elementes bei der Herstellung des optischen Systems erfolgt und nur ein optischer Träger erforderlich ist.

In einer weiteren bevorzugten Ausführungsform ist das weitere optische Element als strahlformendes optisches Element, das den ringabschnittsförmigen Laserstrahl in einer Ebene senkrecht zur Ausbreitungsebene des ringabschnittsförmigen Laserstrahls formt, ausgebildet. Diese Ausführung hat den Vorteil, dass auf einer Zielfläche eine schmale linienförmige Lasermarkierung erzeugt werden kann. Der ringförmige Laserstrahl kann beispielsweise mit Hilfe einer Kollimationsoptik oder einer Fokussieroptik geformt werden.

In einer weiteren bevorzugten Ausführungsform ist das weitere optische Element als strahlformendes optisches Element, das den ringabschnittsförmigen Laserstrahl in einer Ebene parallel zur Ausbreitungsebene des ringabschnittsförmigen Laserstrahls formt, ausgebildet. Diese Ausführung hat den Vorteil, dass neben einer linienförmigen Lasermarkierung auf einer Zielfläche punktförmige Lasermarkierungen erzeugt werden können. Diffraktive optische Elemente formen einen Laserstrahl so, dass die nullte Beugungsordnung des Laserstrahls auf der Zielfläche eine linienförmige Lasermarkierung erzeugt und die höheren Beugungsordnungen, vor allem die erste Beugungsordnung, punktförmige Lasermarkierungen erzeugen. Die punktförmigen Lasermarkierungen können einen definierten Winkel einschließen und beispielsweise dazu genutzt werden, Winkel von einer Zielfläche auf eine andere Zielfläche zu übertragen. Diese Anwendung erweitert das Anwendungsspektrum des erfindungsgemäßen optischen Systems.

In einer bevorzugten Ausführungsform weist der erste Ausschnitt des Grundkörpers eine zur Grundfläche parallele Deckfläche, die zumindest abschnittsweise als Transmissionsfläche für den Laserstrahl ausgebildet ist, auf. Diese Ausführung hat den Vorteil, dass neben dem Linienstrahl ein punktförmiger Lotstrahl erzeugt wird. Über ein in die Deckfläche integriertes oder unmittelbar angrenzendes optisches Element kann die Strahlform des Lotstrahls angepasst werden. Mittels einer Kollimations- oder Fokussieroptik kann ein kollimierter oder fokussierter Lotstrahl erzeugt werden.

Außerdem wird ein Lasersystem mit einer Strahlquelle zur Erzeugung eines Laserstrahls und dem erfindungsgemäßen optischen System vorgeschlagen. Bevorzugt ist eine Verstelleinrichtung vorgesehen, mit der die Position der Strahlquelle zum optischen System und/oder die Position des optischen Systems zur Strahlquelle in einer Ausbreitungsrichtung des Laserstrahls und/oder in einer Ebene senkrecht zur Ausbreitungsrichtung des Laserstrahls verstellbar sind. Die Verstellbarkeit zwischen der Strahlquelle und dem optischen System hat den Vorteil, dass der Öffnungswinkel des ringförmigen Laserstrahls an die Messaufgabe anpassbar ist und die verfügbare Intensität der Strahlquelle optimal nutzbar ist.

In einer bevorzugten Ausführungsform des Lasersystems sind ein erstes optisches System, das einen ersten zumindest abschnittsweise ringförmigen Laserstrahl erzeugt, und mindestens ein weiteres optisches System, das einen weiteren zumindest abschnittsweise ringförmigen Laserstrahl erzeugt, vorgesehen. Besonders bevorzugt ist ein drittes optisches System, das einen dritten zumindest abschnittsweise ringförmigen Laserstrahl erzeugt, vorgesehen. Dabei sind die ringförmigen Laserstrahlen senkrecht zueinander oder unter einem definierten Winkel angeordnet. In einer weiteren bevorzugten Ausführungsform des Lasersystems ist zumindest ein optisches System so ausgebildet, dass neben einem zumindest abschnittsweise ringförmigen Laserstrahl ein punktförmiger Lotstrahl erzeugt wird.

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:

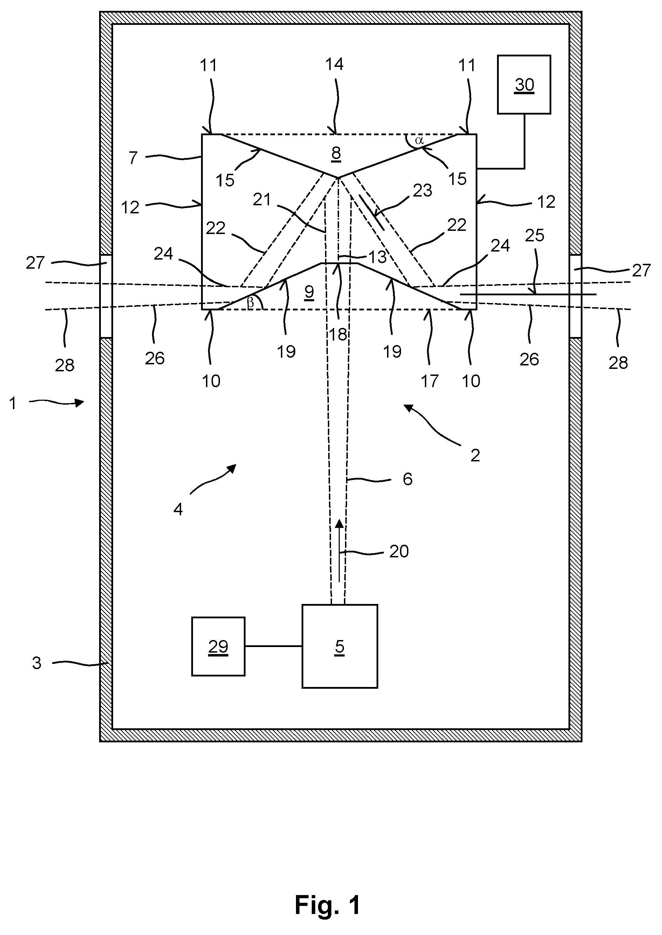

- Fig. 1: ein Lasersystem mit einem Beispiel eines optischen Systems, das als Kreiszylinder mit einem ersten kegelförmigen Ausschnitt in der Deckfläche und einem zweiten kegelstumpfförmigen Ausschnitt in der Grundfläche des Kreiszylinders ausgebildet ist;

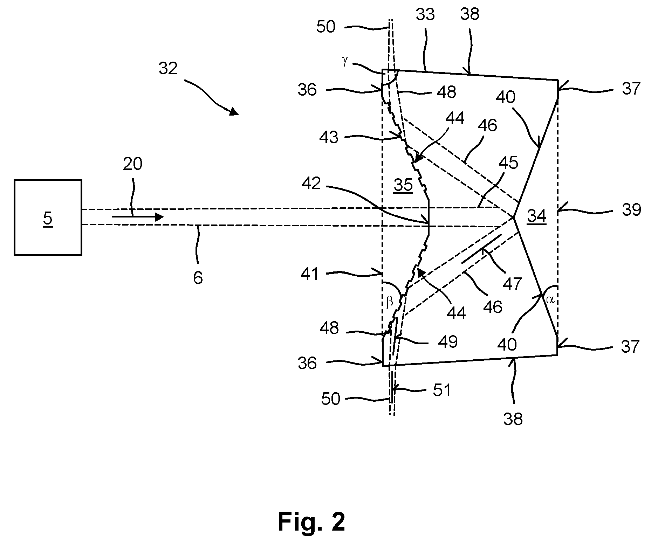

- Fig. 2: eine erste Ausführungsform eines erfindungsgemäßen optischen Systems bestehend aus einem kegelstumpfförmigen Grundkörper mit einem ersten kegelförmigen Ausschnitt in der Deckfläche und einem zweiten kegelstumpfförmigen Ausschnitt in der Grundfläche des Grundkörpers, wobei in die Mantelfläche des zweiten Ausschnittes ein diffraktives optisches Element zur Strahlformung des Laserstrahls integriert ist;

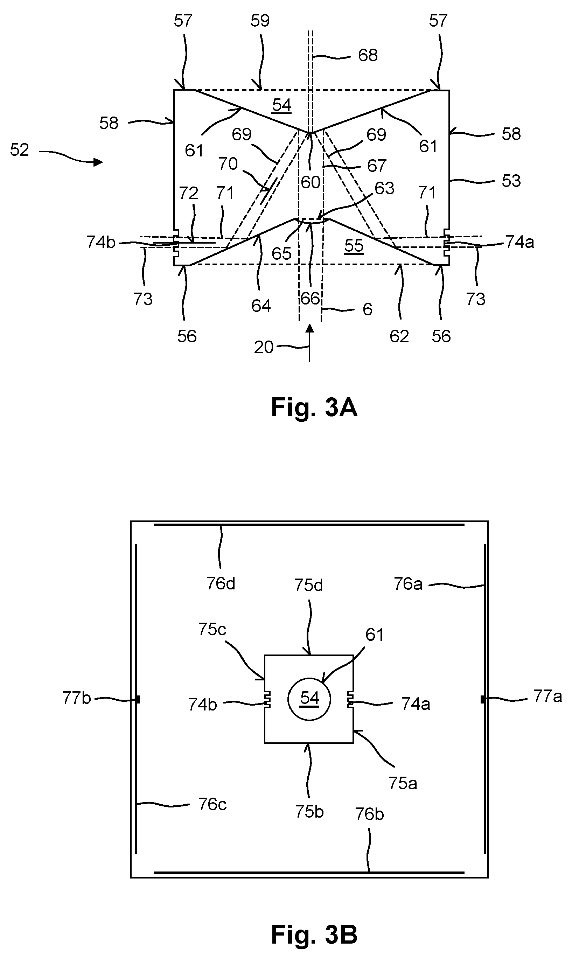

- Fign. 3A, B: eine zweite Ausführungsform eines erfindungsgemäßen optischen Systems bestehend aus einem zylinderförmigen Grundkörper mit einem ersten und zweiten kegelstumpfförmigen Ausschnitt, wobei in die Mantelfläche des Grundkörpers zwei diffraktive optische Elemente zur Strahlformung eines ringförmigen Laserstrahls in der Ausbreitungsebene integriert sind, in einem Schnitt parallel zur Zylinderachse (Fig. 3A) und einem Schnitt senkrecht zur Zylinderachse des Grundkörpers (Fig. 3B); und

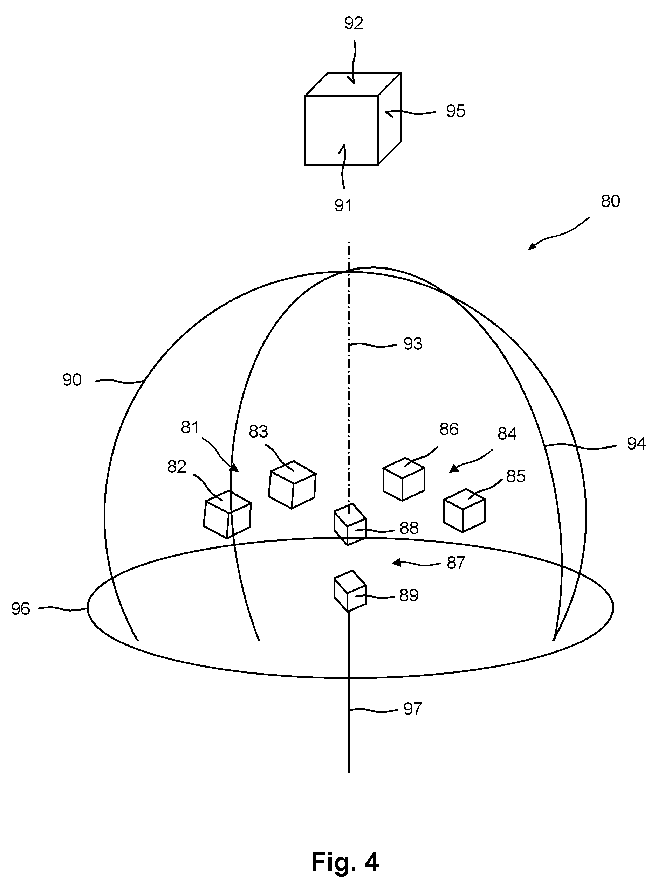

- Fig. 4: ein Lasersystem mit einem ersten und zweiten optischen System, die drei senkrecht zueinander angeordnete, ringförmige Laserstrahlen und einen punktförmigen Lotstrahl erzeugen.

**Fig. 1** zeigt ein Lasersystem **1** mit einem Beispiel eines nicht zur Erfindung gehörenden optischen Systems **2.** Das Lasersystem 1 umfasst ein Gehäuse **3** und eine in dem Gehäuse 3 angeordnete Strahleinrichtung **4** bestehend aus einer Strahlquelle **5** und der erfindungsgemäßen Strahlformungsoptik 2.

Die Strahlquelle 5 ist als Halbleiterlaser ausgebildet, der einen primären Laserstrahl **6** im sichtbaren Spektrum, beispielsweise einen roten Laserstrahl mit einer Wellenlänge von 635 nm oder einen grünen Laserstrahl mit einer Wellenlänge von 532 nm, erzeugt. Nach dem Austritt des primären Laserstrahls 6 aus der Strahlquelle 5 kommt es aufgrund der Divergenz zu einer Aufweitung des Laserstrahls 6, d.h. der Strahldurchmesser des primären Laserstrahls 6 nimmt mit der Entfernung des Laserstrahls 6 von der Strahlquelle 5 zu.

Im Strahlengang hinter der Strahlquelle 5 ist das erfindungsgemäße optische System 2 angeordnet. Das optische System 2 ist als Grundkörper in Form eines geraden Kreiszylinders **7** mit einem ersten kegelförmigen Ausschnitt **8** und einem zweiten kegelstumpfförmigen Ausschnitt **9** ausgebildet. Ein Kreiszylinder ist ein Zylinder mit einer kreisförmigen Grundfläche.

Ein Zylinder ist von zwei parallelen, ebenen Flächen, die als Grund- und Deckfläche bezeichnet werden, und einer Mantelfläche begrenzt. Ein Zylinder entsteht durch Verschiebung einer in einer Ebene liegenden, begrenzten Fläche entlang einer Geraden, die nicht in der Ebene liegt und die Zylinderachse definiert. Bei einem geraden Zylinder liegt die Zylinderachse senkrecht zur Grundfläche, wohingegen die Zylinderachse bei einem schiefen Zylinder unter einem Winkel # 90° zur Grundfläche angeordnet ist. Der Abstand der beiden Ebenen, in denen die Grund- und Deckflächen liegen, definiert die Höhe des Zylinders.

Der Kreiszylinder 7 umfasst eine kreisförmige Grundfläche **10,** eine zur Grundfläche 10 parallele kreisförmige Deckfläche **11** und eine die Grund- und Deckflächen 10, 11 verbindende Mantelfläche **12.** Die Grund- und Deckflächen 10, 11 sind senkrecht und die Mantelfläche 12 parallel zu einer Zylinderachse **13** angeordnet. Die Mantelfläche 12 des Kreiszylinders 7 bildet zwischen dem optischen System 2 und der Umgebung eine Grenzfläche, die als Transmissionsfläche für den Laserstrahl 6 ausgebildet ist. Die Transmissionsfläche 12 wird auch als Austrittsfläche für den Laserstrahl bezeichnet.

Der im Grundkörper 7 vorgesehene erste Ausschnitt 8 ist in Form eines geraden Kreiskegels und der zweite Ausschnitt 9 in Form eines geraden Kegelstumpfes ausgebildet. Ein Kreiskegel ist ein Kegel mit einer kreisförmigen Grundfläche. Ein Kegel ist ein geometrischer Körper, der entsteht, wenn alle Punkte einer in einer Ebene liegenden, begrenzten Fläche geradlinig mit einem Punkt, der außerhalb der Ebene liegt, verbunden werden. Die Fläche wird als Grundfläche, die Begrenzungslinie der Grundfläche als Leitkurve und der Punkt als Kegelspitze bezeichnet. Der Abstand der Kegelspitze von der Grundfläche definiert die Höhe des Kegels. Die Verbindungslinien der Kegelspitze mit der Leitkurve werden als Mantellinien und die Vereinigung der Mantellinien als Mantelfläche des Kegels bezeichnet. Bei einem geraden Kegel mit einer kreisförmigen Grundfläche liegt die Kegelspitze auf der Kegelachse, die senkrecht zur Grundfläche durch den Mittelpunkt der Grundfläche verläuft, wohingegen die Kegelachse bei einem schiefen Kreiskegel außerhalb des Mittelpunktes der Grundfläche verläuft. Ein Kegelstumpf entsteht dadurch, dass von einem geraden Kegel ein kleinerer Kegel parallel zur Grundfläche abgeschnitten wird. Die größere der beiden parallelen Flächen wird als Grundfläche und die kleinere als Deckfläche bezeichnet. Der Abstand der Grund- und Deckflächen definiert die Höhe des Kegelstumpfes. Die dritte der begrenzenden Flächen des Kegelstumpfes, die die Grund- und Deckfläche verbindet, wird als Mantelfläche bezeichnet.

Die Oberfläche des ersten kegelförmigen Ausschnittes 8 umfasst eine kreisförmige Grundfläche **14,** die in der Deckfläche 11 des Grundkörpers 7 angeordnet ist, und eine an die Grundfläche 14 angrenzende Mantelfläche **15,** die unter einem Winkel α zur Grundfläche 14 angeordnet ist. Die Mantelfläche 15 des ersten Ausschnittes 8 bildet zwischen dem Grundkörper 7 und der Umgebung eine Grenzfläche, die als Reflektionsfläche für den Laserstrahl ausgebildet ist. Die Mantelfläche 15 wird auch als erste Reflektionsfläche für den Laserstrahl bezeichnet.

Die Oberfläche des zweiten kegelstumpfförmigen Ausschnittes 9 umfasst eine kreisförmige Grundfläche **17,** die in der Grundfläche 10 des Grundkörpers 7 angeordnet ist, eine zur Grundfläche 17 parallele kreisförmige Deckfläche **18** und eine die Grund- und Deckflächen 17, 18 verbindende Mantelfläche **19,** die unter einem Winkel β zur Grundfläche 17 angeordnet ist. Die Deckfläche 18 und die Mantelfläche 19 bilden zwischen dem Grundkörper 7 und der Umgebung weitere Grenzflächen, wobei die Deckfläche 18 als Transmissionsfläche und die Mantelfläche 19 als Reflektionsfläche für den Laserstrahl ausgebildet sind. Die Transmissionsfläche 18 wird auch als Eintrittsfläche und die Mantelfläche 19 als zweite Reflektionsfläche für den Laserstrahl bezeichnet.

Der divergente primäre Laserstrahl 6 breitet sich in einer Ausbreitungsrichtung **20** aus und trifft auf die Eintrittsfläche 18, durch die der transmittierte Anteil als transmittierter Laserstrahl **21** hindurch tritt. Der transmittierte Laserstrahl 21 propagiert durch den Grundkörper 7 und trifft auf die erste Reflektionsfläche 15, die den reflektierten Anteil umlenkt und in einen zumindest abschnittsweise ringförmigen Laserstrahl **22** umformt. Der ringförmige Laserstrahl 22 breitet sich in einer Ausbreitungsebene **23** aus und trifft auf die zweite Reflektionsfläche 19, die den reflektierten Anteil als zweifach reflektierten Laserstrahl **24** in Richtung der Austrittsfläche 12 umlenkt. Der Laserstrahl 24 breitet sich in einer Ausbreitungsebene **25** aus und trifft auf die Austrittsfläche 12, durch die der transmittierte Anteil als transmittierter Laserstrahl **26** hindurch tritt und sich weiterhin in der Ausbreitungsebene 25 ausbreitet. An der Austrittsfläche 12 erfolgt keine Ablenkung des Laserstrahls.

Der Winkel α der ersten Reflektionsfläche 15 und der Winkel β der zweiten Reflektionsfläche 19 sind so gewählt, dass der primäre Laserstrahl 6 durch das optische System 2 um 90° abgelenkt wird und die Ausbreitungsebene 25 des ringförmigen Laserstrahls 26 senkrecht zur Ausbreitungsrichtung 20 des primären Laserstrahls 6 verläuft. Der Laserstrahl 26 wird über ein Auskoppelfenster **27** aus dem Gehäuse 3 ausgekoppelt und trifft als ausgekoppelter Laserstrahl **28** auf eine Wand, Decke oder ein sonstiges Zielobjekt und kann als Lasermarkierung verwendet werden.

Die Sichtbarkeit eines Laserstrahls auf einem Zielobjekt hängt unter anderem von der Intensität des Laserstrahls ab. Daher ist es sinnvoll, den Öffnungswinkel der Lasermarkierung an die Messaufgabe anzupassen, um die verfügbare Intensität auszunutzen. Der Öffnungswinkel des ausgekoppelten Laserstrahls 28 kann über den Bereich, den der transmittierte Laserstrahl 21 auf der ersten Reflektionsfläche 15 ausleuchtet, eingestellt werden. Wird beispielsweise eine linienförmige Lasermarkierung von 180° benötigt, leuchtet der transmittierte Laserstrahl 21 nur die Hälfte der ersten Reflektionsfläche 15 aus. Durch Verschiebung der optischen Achse des primären Laserstrahls 6 und/oder der Zylinderachse 13 des Kreiszylinders 7 ist der Öffnungswinkel des ausgekoppelten Laserstrahls einstellbar. Dazu ist eine Verstelleinrichtung **29** vorgesehen, mit der die Position der Strahlquelle 5 in der Ausbreitungsrichtung 20 des primären Laserstrahls 6 und/oder in einer Ebene senkrecht zur Ausbreitungsrichtung 20 des primären Laserstrahls 6 verstellbar ist. Alternativ oder zusätzlich ist eine weitere Verstelleinrichtung **30** vorgesehen, mit der das optische System 2 in der Ausbreitungsrichtung 20 des primären Laserstrahls 6 und/oder in der Ebene senkrecht zur Ausbreitungsrichtung 20 verstellbar ist.

**Fig. 2** zeigt eine erste Ausführungsform eines erfindungsgemäßen optischen Systems **32,** das als Grundkörper **33** in Form eines geraden Kegelstumpfes mit einem ersten kegelförmigen Ausschnitt **34** und einem zweiten kegelstumpfförmigen Ausschnitt **35** ausgebildet ist. Der Kegelstumpf 33 umfasst eine kreisförmige Grundfläche **36,** eine zur Grundfläche 36 parallele, kreisförmige Deckfläche **37** und eine Mantelfläche **38,** die unter einem Winkel γ zur Grundfläche 36 angeordnet und für den Laserstrahl als Transmissionsfläche in Form einer Austrittsfläche ausgebildet ist. Die Oberfläche des ersten kegelförmigen Ausschnittes 34 umfasst eine kreisförmige Grundfläche **39,** die in der Deckfläche 37 des Grundkörpers 33 angeordnet ist, und eine an die Grundfläche 39 angrenzende Mantelfläche **40,** die als erste Reflektionsfläche für den Laserstrahl ausgebildet ist. Die Oberfläche des zweiten kegelstumpfförmigen Ausschnittes 35 umfasst eine kreisförmige Grundfläche **41,** die in der Grundfläche 36 des Grundkörpers 33 angeordnet ist, eine zur Grundfläche 41 parallele kreisförmige Deckfläche **42,** die für den Laserstrahl als Transmissionsfläche in Form einer Eintrittsfläche ausgebildet ist, und eine Mantelfläche **43,** die als zweite Reflektionsfläche für den Laserstrahl ausgebildet ist.

Das optische System 32 umfasst ein weiteres optisches Element **44,** das in Form einer mikrostrukturierten Oberfläche in die Mantelfläche 43 des zweiten kegelstumpfförmigen Ausschnittes 35 integriert ist. Dabei bedeutet der Begriff "integriert", dass zwischen dem Grundkörper 33 und dem optischen Element 44 keine Grenzfläche besteht. Mikrostrukturierte O-berflächen sind auch unter der Bezeichnung "diffraktive optische Elemente", abgekürzt DOE, bekannt. Sie wirken prinzipiell wie ein optisches Gitter und spalten einen einfallenden Laserstrahl winkelabhängig in verschiedene Beugungsordnungen. Diffraktive optische Elemente haben den Vorteil, dass sich Laserstrahlen in nahezu jede beliebige Strahlverteilung formen lassen. Sie werden in photolithographischen Herstellungsverfahren sowie mittels scannender Strukturierungsverfahren wie Diamantdrehen, Laser- oder Elektronenstrahlschreiben hergestellt.

Das optische Element 44 kann alternativ oder zusätzlich zur Mantelfläche 43 des zweiten kegelstumpfförmigen Ausschnittes 35 in die als Transmissionsfläche ausgebildete Deckfläche 42 des zweiten Ausschnittes 35, in die als erste Reflektionsfläche ausgebildete Mantelfläche 40 des ersten Ausschnittes 34 und/oder in die als Transmissionsfläche ausgebildete Mantelfläche 38 des Grundkörpers 33 integriert sein.

Der primäre Laserstrahl 6 trifft auf die Eintrittsfläche 42, durch die der transmittierte Anteil als transmittierter Laserstrahl **45** hindurch tritt. Der transmittierte Laserstrahl 45 propagiert durch den Grundkörper 33 und trifft auf die erste Reflektionsfläche 40, an der der reflektierte Anteil umgelenkt und in einen ringförmigen Laserstrahl **46** umgeformt wird. Der ringförmige Laserstrahl 46 breitet sich in einer Ausbreitungsebene **47** aus und trifft auf die zweite Reflektionsfläche 43, die den reflektierten Anteil als zweifach reflektierten Laserstrahl **48** in Richtung der Austrittsfläche 38 umlenkt. Der Laserstrahl 48 breitet sich in einer Ausbreitungsebene **49** aus und wird durch das in die zweite Reflektionsfläche 43 integrierte diffraktive optische Element 44 in einer Ebene senkrecht zur Ausbreitungsebene 49 geformt. Fig. 2 zeigt eine Ausführung, in der der Laserstrahl 48 senkrecht zur Ausbreitungsebene 49 fokussiert wird, so dass eine scharfe linienförmige Lasermarkierung erzeugt wird.

Der Laserstrahl 48 trifft auf die Austrittsfläche 38, durch die der transmittierte Anteil als transmittierter Laserstrahl **50** hindurch tritt und entsprechend des Einfallswinkels an der Austrittsfläche 38 abgelenkt wird. Der Winkel α der ersten Reflektionsfläche 40, der Winkel β der zweiten Reflektionsfläche 43 und der Winkel γ der Austrittsfläche 38 sind so aufeinander abgestimmt, dass der primäre Laserstrahl 6 durch das optische System 52 um 90° abgelenkt wird und eine Ausbreitungsebene **51** des Laserstrahls 50 senkrecht zur Ausbreitungsrichtung 20 des primären Laserstrahls 6 verläuft.

**Fign. 3A****, B** zeigen eine zweite Ausführungsform eines erfindungsgemäßen optischen Systems **52,** das als Grundkörper **53** in Form eines Zylinders mit einem ersten kegelstumpfförmigen Ausschnitt **54** und einem zweiten kegelstumpfförmigen Ausschnitt **55** ausgebildet ist. Dabei zeigt Schnitt Fig. 3A einen Schnitt durch das optische System 52 parallel zur Zylinderachse des Grundkörpers 53 und Fig. 3B einen Schnitt senkrecht zur Zylinderachse.

Der Grundkörper 53 umfasst eine quadratische Grundfläche **56,** eine zur Grundfläche 56 parallele, quadratische Deckfläche **57** und eine Mantelfläche **58,** die für den Laserstrahl als Transmissionsfläche in Form einer Austrittsfläche ausgebildet ist. Die Oberfläche des ersten Ausschnittes 54 umfasst eine kreisförmige Grundfläche **59,** die in der Deckfläche 57 des Grundkörpers 53 angeordnet ist, eine zur Grundfläche 59 parallele Deckfläche **60** und eine an die Grund- und Deckfläche 59, 60 angrenzende Mantelfläche **61,** die als erste Reflektionsfläche für den Laserstrahl ausgebildet ist. Die Oberfläche des zweiten Ausschnittes 55 umfasst eine kreisförmige Grundfläche **62,** die in der Grundfläche 56 des Grundkörpers 53 angeordnet ist, eine zur Grundfläche 62 parallele, kreisförmige Deckfläche **63,** die für den Laserstrahl als Transmissionsfläche ausgebildet ist, und eine Mantelfläche **64,** die als zweite Reflektionsfläche für den Laserstrahl ausgebildet ist.

Das optische System 52 weist ein als Kollimationsoptik ausgebildetes weiteres optisches Element **65** auf, das unmittelbar an die Deckfläche 63 des zweiten kegelstumpfförmigen Ausschnittes 55 angrenzt. Dabei bedeutet der Begriff "unmittelbar angrenzend", dass der Grundkörper 53 und die Kollimationsoptik 65 eine gemeinsame Grenzfläche aufweisen und zwischen den optischen Flächen der beiden optischen Elemente 53, 65 kein sonstiges optisches Element oder Medium mit einem unterschiedlichen Brechungsindex, wie beispielsweise Luft, angeordnet ist. Die Kollimationsoptik 65 ist als asphärisch gekrümmte Linse ausgebildet und die der Deckfläche 63 abgewandte Oberfläche der Kollimationsoptik 65 bildet eine Transmissionsfläche für den Laserstrahl 6 in Form einer gekrümmten Eintrittsfläche **66.** Alternativ kann die Kollimationsoptik 65 in den Grundkörper 53 integriert und monolithisch aus einem Material hergestellt werden. Als Materialien eignen sich beispielsweise Glas und Kunststoffe. Die asphärische Krümmung wird bei Glas beispielsweise durch Diamantdrehen, Replika, Schleifen und Polieren oder durch Pressen bei hohen Temperaturen aus einem Glaspressling und bei Kunststoff durch Spritzgiessen oder Spritzprägen erzeugt.

Der primäre Laserstrahl 6 trifft auf die Eintrittsfläche 66, durch die der transmittierte Anteil hindurch tritt und mittels der Kollimationsoptik 65 in einen kollimierten Laserstrahl **67** geformt wird. Der kollimierte Laserstrahl 67 propagiert durch den Grundkörper 53 und trifft zu einem Teil auf die Deckfläche 60, die als Transmissionsfläche ausgebildet ist und den transmittierten Anteil als punktförmigen Lotstrahl **68** hindurch lässt, und zu einem anderen Teil auf die erste Reflektionsfläche 61, die den reflektierten Anteil umlenkt und in einen ringförmigen Laserstrahl **69** umformt. Der Laserstrahl 69 breitet sich in einer Ausbreitungsebene **70** aus und trifft auf die zweite Reflektionsfläche 64, die den reflektierten Anteil als zweifach reflektierten Laserstrahl 71 in Richtung der Mantelfläche 58 des Grundkörpers 53 umlenkt. Der Laserstrahl 71 breitet sich in einer Ausbreitungsebene **72** aus und trifft auf die Austrittsfläche 58, durch die der transmittierte Anteil als transmittierter Laserstrahl **73** hindurch tritt. An der Austrittsfläche 58 erfolgt keine Ablenkung des Laserstrahls 73, der sich weiterhin in der Ausbreitungsebene 72 ausbreitet.

Das optische System 52 umfasst zwei weitere optische Elemente, die in Form eines ersten und zweiten diffraktiven optischen Elementes **74a, 74b** ausgebildet und in die Mantelfläche 58 des Grundkörpers 53 integriert sind. Die diffraktiven optischen Elemente 74a, 74b formen den ringförmigen Laserstrahl 71 in einer Ebene parallel zur Ausbreitungsebene 72 formen. Die Austrittsfläche 58 umfasst vier Seitenflächen **75a-75d** des Grundkörpers 53. Bei einer quadratischen Grundfläche ist die Richtungsableitung der Begrenzungslinie im Bereich der Seiten stetig und im Bereich der Eckpunkte nicht stetig. Die Seitenflächen 75a-75d erzeugen auf einer Zielfläche jeweils eine linienförmige Lasermarkierung **76a-76d.** Die diffraktiven optischen Elemente 74a, 74b sind so ausgebildet, dass die nullte Beugungsordnung des Laserstrahls 71 auf der Zielfläche einen Teil der linienförmigen Lasermarkierungen 76a, 76c erzeugt und die höheren Beugungsordnungen, vor allem die erste Beugungsordnung, punktförmige Lasermarkierungen **77a, 77b** erzeugen.

**Fig. 4** zeigt ein erfindungsgemäßes Lasersystem **80,** das drei ringförmige Laserstrahlen, die als Ringstrahlen bezeichnet werden, und einen punktförmigen Laserstrahl, der als Punktstrahl bezeichnet wird, erzeugt.

Das Lasersystem 80 umfasst eine erste Strahleinrichtung **81** mit einer ersten Strahlquelle **82** und einem ersten erfindungsgemäßen optischen System **83,** eine zweite Strahleinrichtung **84** mit einer zweiten Strahlquelle **85** und einem zweiten erfindungsgemäßen optischen System **86** und eine dritte Strahleinrichtung **87** mit einer dritten Strahlquelle **88** und einem dritten erfindungsgemäßen optischen System **89.** Die erfindungsgemäßen optischen Systeme 83, 86, 89 entsprechen einem der optischen Systeme 2, 32, 52.

Die erste Strahleinrichtung 81 erzeugt einen ersten Ringstrahl **90,** der in einer ersten vertikalen Ebene **91** angeordnet ist und als erster vertikaler Ringstrahl bezeichnet wird. Die erste vertikale Ebene 91 ist senkrecht zu einer horizontalen Ebene **92** angeordnet. Die Ausrichtung der horizontalen Ebene 92 ist über eine durch die Gravitationskraft bestimmte vertikale Richtung **93** definiert.

Die zweite Strahleinrichtung 84 erzeugt einen zweiten Ringstrahl **94,** der in einer zweiten vertikalen Ebene **95** angeordnet ist und als zweiter vertikaler Ringstrahl bezeichnet wird. Die zweite vertikale Ebene 95 ist senkrecht zur horizontalen Ebene 92 und senkrecht zur ersten vertikalen Ebene 91 ausgerichtet.

Die dritte Strahleinrichtung 87 erzeugt einen dritten Ringstrahl **96,** der in der horizontalen Ebene 92 angeordnet ist und als horizontaler Ringstrahl bezeichnet wird. Der horizontale Ringstrahl 96 ist senkrecht zum ersten und zweiten vertikalen Ringstrahl 90, 94 angeordnet. Die dritte Strahleinrichtung 87 erzeugt neben dem horizontalen Ringstrahl 96 einen Punktstrahl **97,** der entgegengesetzt zur vertikalen Richtung 93 ausgerichtet ist und auf der Schnittlinie der beiden vertikalen Ringstrahlen 90, 94 liegt. Der Punktstrahl 97 kann alternativ auch von einer zusätzlichen Strahlquelle erzeugt werden.

Alternativ zum Lasersystem 80, das drei Strahlquellen 82, 85, 88 umfasst, kann das Lasersystem auch eine einzige Strahlquelle aufweisen. In diesem Fall wird der Laserstrahl über Strahlteiler in mehrere Teilstrahlen geteilt. Die Ausführung eines Lasersystems mit einer einzigen Strahlquelle ist dann vorteilhaft, wenn die Strahlquelle eine ausreichende Leistung zur Verfügung stellen kann, dass die Ringstrahlen auf dem Untergrund sichtbar sind. Ein Lasersystem mit einer einzigen Strahlquelle kann kompakter aufgebaut werden als ein Lasersystem, in dem drei Strahlquellen angeordnet sind.

## Patentansprüche

1. Optisches System (2; 32; 52) zur Strahlformung eines Laserstrahls (6) bestehend aus einem ersten, optischen Element, das als Grundkörper (7; 33; 53) mit einer Grundfläche (10; 36; 56), einer Deckfläche (11; 37; 57) und einer an die Grund- und Deckfläche (10, 11; 36, 37; 56, 57) angrenzenden Mantelfläche (12; 38; 58) ausgebildet ist, wobei die Mantelfläche (12; 38; 58) als Transmissionsfläche für den Laserstrahl (6) ausgebildet ist und der Grundkörper (7; 33; 53) einen ersten Ausschnitt (8; 34; 54) umfasst mit einer Grundfläche (14; 39; 59), die in der Deckfläche (11; 37; 57) des Grundkörpers (7; 33; 53) angeordnet ist, und einer Mantelfläche (15; 40; 61), die als erste Reflektionsfläche für den Laserstrahl ausgebildet ist und einen ringabschnittsförmigen Laserstrahl (22; 46; 69) erzeugt, wobei der Grundkörper (7; 33; 53) einen zweiten Ausschnitt (9; 35; 55) umfasst mit einer Grundfläche (17; 41; 62), die in der Grundfläche (10; 36, 56) des Grundkörpers (7; 33; 53) angeordnet ist, einer Deckfläche (18; 42; 63), die als Transmissionsfläche für den Laserstrahl ausgebildet ist, und einer an die Grund- und Deckfläche (17, 18; 41, 42; 62, 63) angrenzenden Mantelfläche (19; 43; 64), die als zweite Reflektionsfläche für den ringabschnittsförmigen Laserstrahl (22; 46; 69) ausgebildet ist, wobei der Winkel zwischen der ersten Reflektionsfläche und der Grundfläche des ersten Ausschnittes und der Winkel zwischen der zweiten Reflektionsfläche und der Grundfläche des zweiten Ausschnittes so aufeinander abgestimmt sind, dass der einfallende Laserstrahl (6) nach Verlassen des optischen Systems um 90° abgelenkt wird,
**dadurch gekennzeichnet, dass** mindestens ein weiteres optisches Element (44; 65; 74a, 74b) in die Mantelfläche (12; 38; 58) des Grundkörpers (7; 33, 53), die Mantelfläche (15; 40; 61) des ersten Ausschnittes (8; 34; 54) oder die Mantelfläche (19; 43; 64) des zweiten Ausschnittes (9; 35; 55) integriert ist oder dass mindestens ein weiteres optisches Element (65) unmittelbar an die Mantelfläche (12; 38; 58) des Grundkörpers (7; 33; 53), die Mantelfläche (15; 40; 61) des ersten Ausschnittes (8; 34; 54) oder die Mantelfläche (19; 43; 64) des zweiten Ausschnittes (9; 35; 55) angrenzt und dass zweite optische Element der Strahlformung dient.

2. Optisches System nach Anspruch 1, **dadurch gekennzeichnet, dass** das weitere optische Element als diffraktives optisches Element (44; 74a, 74b) ausgebildet ist.

3. Optisches System nach einem der Ansprüche 1 bis 2, **dadurch gekennzeichnet, dass** das weitere optische Element als strahlformendes optisches Element (44), das den ringabschnittsförmigen Laserstrahl (46, 48) in einer Ebene senkrecht zur Ausbreitungsebene (47, 49) des ringabschnittsförmigen Laserstrahls (46, 48) formt, ausgebildet ist.

4. Optisches System nach einem der Ansprüche 1 bis 3, **dadurch gekennzeichnet, dass** das weitere optische Element als strahlformendes optisches Element (74a, 74b), das den ringabschnittsförmigen Laserstrahl (69, 71) in einer Ebene parallel zur Ausbreitungsebene (70, 72) des ringabschnittsförmigen Laserstrahls (69, 71) formt, ausgebildet ist.

5. Optisches System nach einem der Ansprüche 1 bis 4, **dadurch gekennzeichnet, dass** der erste Ausschnitt (54) des Grundkörpers (53) eine zur Grundfläche (59) parallele Deckfläche (60), die als Transmissionsfläche für den Laserstrahl ausgebildet ist, aufweist.

## Claims

1. Optical system (2; 32; 52) for shaping a laser beam (6) consisting of a first optical element designed as a base body (7; 33; 53) with a base surface (10; 36; 56), a top surface (11; 37; 57) and a lateral surface (12; 38; 58) adjoining the base and top surfaces (10, 11; 36, 37; 56, 57), wherein the lateral surface (12; 38; 58) is designed as a transmitting surface for the laser beam (6) and the base body (7; 33; 53) includes a first cutout (8; 34; 54) with a base surface (14; 39; 59) arranged in the top surface (11; 37; 57) of the base body (7; 33; 53) and a lateral surface (15; 40; 61) designed as a first reflecting surface for the laser beam and generating an annular segment-shaped laser beam (22; 46; 69), wherein the base body (7; 33; 53) includes a second cutout (9; 35; 55) with a base surface (17; 41; 62) arranged in the base surface (10; 36, 56) of the base body (7; 33; 53), a top surface (18; 42; 63) designed as a transmitting surface for the laser beam and a lateral surface (19; 43; 64) adjoining the base and top surfaces (17, 18; 41, 42; 62, 63) designed as a second reflecting surface for the annular segment-shaped laser beam (22; 46; 69), and wherein the angle between the first reflecting surface and the base surface of the first cutout and the angle between the second reflecting surface and the base surface of the second cutout are adapted to one another in such a manner that the incident laser beam (6) is deflected through 90° after leaving the optical system, **characterised in that** at least one further optical element (44; 65; 74a, 74b) is integrated into the lateral surface (12; 38; 58) of the base body (7; 33, 53), the lateral surface (15; 40; 61) of the first cutout (8; 34; 54) or the lateral surface (19; 43; 64) of the second cutout (9; 35; 55) or that at least one further optical element (65) directly adjoins the lateral surface (12; 38; 58) of the base body (7; 33; 53), the lateral surface (15; 40; 61) of the first cutout (8; 34; 54) or the lateral surface (19; 43; 64) of the second cutout (9; 35; 55) and that the second optical element serves to shape the beam.

2. Optical system according to claim 1, **characterised in that** the further optical element is designed as a diffractive optical element (44; 74a, 74b).

3. Optical system according to one of claims 1 to 2, **characterised in that** the further optical element is designed as a beam-shaping optical element (44) that shapes the annular segment-shaped laser beam (46, 48) in a plane perpendicular to the propagation plane (47, 49) of the annular segment-shaped laser beam (46, 48).

4. Optical system according to one of claims 1 to 3, **characterised in that** the further optical element is designed as a beam-shaping optical element (74a, 74b) that shapes the annular segment-shaped laser beam (69, 71) in a plane parallel to the propagation plane (70, 72) of the annular segment-shaped laser beam (69, 71).

5. Optical system according to one of claims 1 to 4, **characterised in that** the first cutout (54) of the base body (53) has a top surface (60) parallel to the base surface (59) designed as a transmitting surface for the laser beam.

## Revendications

1. Système optique (2 ; 32 ; 52) destiné à former le faisceau d'un faisceau laser (6), constitué d'un premier élément optique qui est configuré sous la forme d'un élément de base (7 ; 33 ; 53) avec une surface de base (10 ; 36 ; 56), une surface de recouvrement (11 ; 37 ; 57) et une surface d'enveloppe (12 ; 38 ; 58) adjacente aux surfaces de base et de recouvrement (10, 11 ; 36, 37 ; 56, 57), dans lequel la surface d'enveloppe (12 ; 38 ; 58) est configurée sous la forme d'une surface de transmission pour le faisceau laser (6) et l'élément de base (7 ; 33 ; 53) comprend une première partie (8 ; 34 ; 54) avec une surface de base (14 ; 39 ; 59) qui est agencée dans la surface de recouvrement (11 ; 37 ; 57) de l'élément de base (7 ; 33 ; 53), et une surface d'enveloppe (15 ; 40 ; 61) qui est configurée sous la forme d'une première surface de réflexion pour le faisceau laser et génère un faisceau laser annulaire segmenté (22 ; 46 ; 69), dans lequel l'élément de base (7 ; 33 ; 53) comprend une seconde partie (9 ; 35 ; 55) avec une surface de base (17 ; 41 ; 62) qui est agencée dans la surface de base (10 ; 36 ; 56) de l'élément de base (7 ; 33 ; 53), une surface de recouvrement (18 ; 42 ; 63) qui est configurée sous la forme d'une surface de transmission pour le faisceau laser, et une surface d'enveloppe (19 ; 43 ; 64) adjacente aux surfaces de base et de recouvrement (17, 18 ; 41, 42 ; 62, 63), qui est configurée sous la forme d'une seconde surface de réflexion pour le faisceau laser annulaire segmenté (22 ; 46 ; 69), dans lequel l'angle entre la première surface de réflexion et la surface de base de la première partie et l'angle entre la seconde surface de réflexion et la surface de base de la seconde partie sont déterminés l'un par rapport à l'autre de telle sorte que le faisceau laser incident (6) est dévié de 90° après avoir quitté le système optique,
**caractérisé en ce qu'**au moins un élément optique supplémentaire (44 ; 65 ; 74a, 74b) est intégré dans la surface d'enveloppe (12 ; 38 ; 58) de l'élément de base (7 ; 33 ; 53), la surface d'enveloppe (15 ; 40 ; 61) de la première partie (8 ; 34 ; 54) ou la surface d'enveloppe (19 ; 43 ; 64) de la seconde partie (9 ; 35 ; 55), ou **en ce qu'**au moins un élément optique supplémentaire (65) est directement adjacent à la surface d'enveloppe (12 ; 38 ; 58) de l'élément de base (7 ; 33 ; 53), la surface d'enveloppe (15 ; 40 ;61) de la première partie (8 ; 34 ; 54) ou la surface d'enveloppe (19 ; 43 ; 64) de la seconde partie (9 ; 35 ; 55), et **en ce qu'**un second élément optique sert à la formation du faisceau.

2. Système optique selon la revendication 1, **caractérisé en ce que** l'élément optique supplémentaire est configuré sous la forme d'un élément optique diffracteur (44 ; 74a, 74b).

3. Système optique selon l'une des revendications 1 à 2, **caractérisé en ce que** l'élément optique supplémentaire est configuré sous la forme d'un élément optique de formation de faisceau (44) qui forme le faisceau laser annulaire segmenté (46, 48) dans un plan perpendiculaire au plan de propagation (47, 49) du faisceau laser annulaire segmenté (46, 48).

4. Système optique selon l'une des revendications 1 à 3, **caractérisé en ce que** l'élément optique supplémentaire est configuré sous la forme d'un élément optique de formation de faisceau (74a, 74b) qui forme le faisceau laser annulaire segmenté (69, 71) dans un plan parallèle au plan de propagation (70, 72) du faisceau laser annulaire segmenté (69, 71).

5. Système optique selon l'une des revendications 1 à 4, **caractérisé en ce que** la première partie (54) de l'élément de base (53) comporte une surface de recouvrement (60) parallèle à la surface de base (59), laquelle surface de recouvrement est configurée sous la forme d'une surface de transmission pour le faisceau laser.
